# EUROPEAN PATENT SPECIFICATION

(11) **EP 3 280 955 B1**
(45) Date of publication and mention of the grant of the patent: **06.05.2020**
(21) Application number: 16711186.3
(22) Date of filing: 14.03.2016
(51) Int. Cl.: F23N 5/10

(54) **SAFETY VALVE ADAPTED TO A GAS COMBUSTION APPLIANCE**
SICHERHEITSVENTIL ANGEPASST AN EINER GASVERBRENNUNGSANLAGE
SOUPAPE DE SÉCURITÉ ADAPTEE A UN APPAREIL DE GAZ DE COMBUSTION

(30) Priority: 08.04.2015 ES 201530394 U
(43) Date of publication of application: 14.02.2018
(73) Proprietor: ORKLI, S. COOP., 20240 Ordizia (Gipuzkoa) (ES)
(72) Inventor: PABLO CURTO, Marcos, 20120 Hernani (ES); UNANUE IMAZ, Andoni, 20213 Idiazabal (ES); ZURIARRAIN BERASATEGI, Mikel, 20220 Aztiria (ES)
(74) Representative: Igartua, Ismael
(86) International application number: PCT/EP2016/055419
(87) International publication number: WO 2016/162173

(56) References cited:
- EP-A1- 0 619 460
- EP-A1- 1 669 673
- WO-A2-2004/088205
- ES-U- 1 030 940
- US-A- 2 503 459

## Description

### TECHNICAL FIELD

The present invention relates to a safety valve adapted to a gas combustion appliance. The invention particularly relates to a safety valve having fixing means optimized for fixing a magnetic group comprised in said safety valve to a body of said safety valve.

### PRIOR ART

Safety valves adapted to a gas combustion appliance comprising a magnetic group opening or closing gas passage towards the burner are known in the state of the art. Generally, the magnetic group is connected to an external power supply source and/or to a thermocouple keeping the magnetic group energized as long as flame is detected in the burner, such that it is assured that the safety valve closes the gas passage towards the burner in the absence of flame.

Documents ES1024395U and ES1023978U both disclose a safety valve comprising a magnetic group and the connection thereof to a thermocouple. In both utility models, the magnetic group is housed in the body of the safety valve and fixed to said body through a threaded element. Said threaded element has two functions, on one hand, to assure sealing for which the tightening torque that must be applied by the operator is very high, and on the other hand, to be electrically conductive in order to act as a grounding terminal of the electromagnet.

Document EP1669673 discloses a safety valve for a gas appliance according to the preamble of claim 1.

### DISCLOSURE OF THE INVENTION

The object of the invention is to provide a safety valve adapted to a gas combustion appliance, according to claim 1.

A safety valve with quick and optimized fixing means is thus obtained. On one hand, it is not necessary for the operator to apply a high tightening torque as occurs with the conventional threaded elements for obtaining the necessary sealing. The operator only has to fit the free end of the cylindrical central part to the body with the suitable tool, said operation being quicker and requiring less effort. Furthermore, the fixing element is a simple element which is much lighter in terms of material requirement and easier to manufacture compared to the conventional threaded element.

These and other advantages and features of the invention will become evident in view of the drawings and the detailed description of the invention.

### DESCRIPTION OF THE DRAWINGS

Figure 1 shows an exploded view of an embodiment of the safety valve adapted to a gas combustion appliance according to the invention.
Figure 2 is a partial sectioned view of the safety valve shown in Figure 1.
Figure 3 is a partial sectioned view of another embodiment of the safety valve of the invention.
Figure 4 shows a perspective view of an embodiment of a tool for crimping.

### DETAILED DISCLOSURE OF THE INVENTION

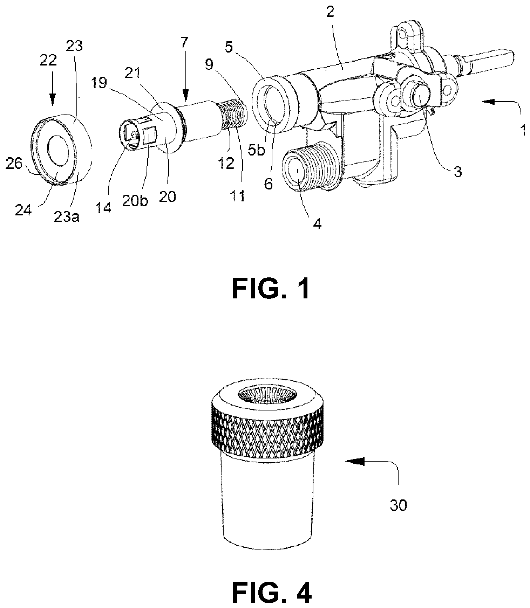

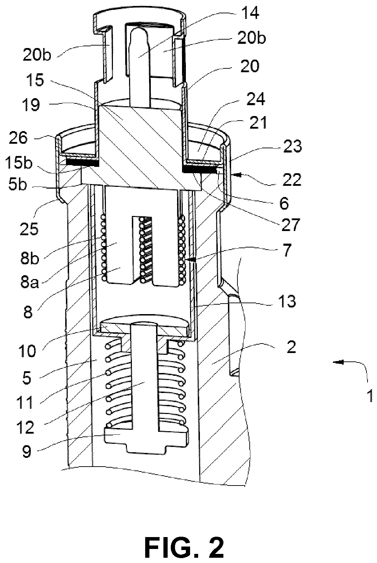

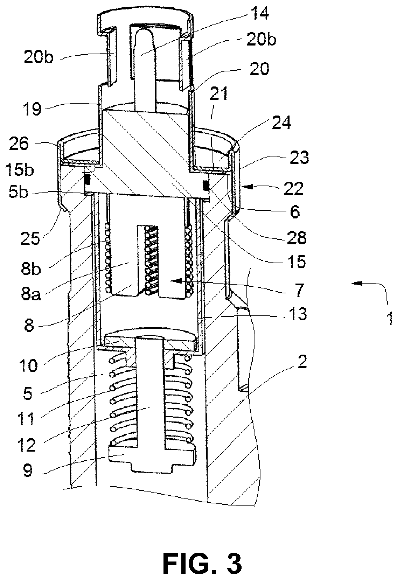

Figures 1 and 2 show a first embodiment of a safety valve 1 adapted to a gas combustion appliance allowing or blocking gas passage towards a burner of the gas combustion appliance (not depicted). Figure 3 shows a second embodiment of the safety valve 1 of the invention.

The safety valve 1 comprises a body 2 which in turn comprises an inlet conduit 3 for the gas, an outlet conduit 4 for the gas communicated with the burner and a magnetic group 7 which is at least partially housed in a housing 5 of the body 2. The housing 5 communicates the inlet conduit 3 with the outlet conduit 4 of the body 2. Furthermore, said housing 5 communicates with the outside.

The magnetic group 7 is known in the state of the art so it will not be described in detail. The magnetic group 7, shown in detail in Figures 2 and 3, comprises an electromagnet 8, a shutter 9 adapted for sealing against the body 2 the gas passage towards the outlet conduit 4, a moving frame 10 coupled to the shutter 9 and movable together with the shutter 9 between a safety valve opening position allowing gas passage towards the outlet conduit 4 (and therefore, towards the burner) and a safety valve closing position wherein the shutter 9 closes the gas passage towards the outlet conduit 4 (and therefore, towards the burner), and a spring 11 forcing the shutter 9 together with the moving frame 10 to return to the safety valve closing position when the electromagnet 8 is not energized. The shutter 9 is coupled to the moving frame 10 through a rod 12.

Once the electromagnet 8 is energized either manually or through a specific power supply source, it is kept energized through a thermocouple (not depicted) as long as said thermocouple detects the presence of flame in the burner. In said position, the moving frame 10 is in contact with the electromagnet 8 (safety valve opening position) and the shutter 9 does not close the gas passage towards the outlet conduit 4. When the electromagnet 8 is no longer energized, the spring 11 acts on the shutter 9, moving it together with the moving frame 10 to the safety valve closing position, closing gas passage towards the outlet conduit 4.

On the other hand, the magnetic group 7 comprises a support 15 of the electromagnet 8. The support 15 is made of an electrically conductive material, preferably a metallic material. The support 15 comprises a housing 16 in which the electromagnet 8 is partially housed and supported. Furthermore, the electromagnet 8 comprises a core 8a made of a ferromagnetic material and a winding 8b comprising a first end connected to a grounding terminal and a second end connected to a phase terminal 14 of the magnetic group 7. The magnetic group 7 further comprises a casing 13 enclosing therein the electromagnet 8, the moving frame 10 and the support 15 partially.

In the embodiments shown in Figures 1 to 3, the support 15 acts as a grounding terminal, the first end of the winding 8b being fixed to the support 15. The second end of the winding 8b in turn at least partially goes through the support 15, being fixed to the phase terminal 14

Furthermore, the body 2 of the safety valve 1 includes a recess 5b in the housing 5 such that the support 15 is supported on said recess 5b when the magnetic group 7 is housed in the housing 5 of the body 2.

On the other hand, the safety valve 1 further comprises a bushing 19 electrically connected to the grounding terminal 15 and arranged substantially concentric to the terminal phase 14 of the magnetic group 7.

The bushing 19, shown in detail in Figure 1, has a cylindrical part 20 and an annular base 21 extending from an end of the cylindrical part 20. The bushing 19 is a metallic bushing, preferably a steel bushing. Said bushing 19 is coupled to the support 15. Furthermore, said bushing 19 includes protrusions 20b in the cylindrical part 20 extending radially towards the inside of the bushing 19, said protrusions 20b being adapted for guiding the insertion as well as assuring a good connection of the thermocouple (not depicted) with the bushing 19. The protrusions 20b are distributed radially equidistant from one another along the perimeter of the bushing 19. The bushing 19 is adapted for electrically connecting the grounding terminal of the magnetic group 7 with a grounding terminal of the thermocouple.

The safety valve 1 further comprises fixing means 22 for fixing the bushing 19 and the magnetic group 7 to the body 2. The fixing means 22 comprise a fixing element 23 comprising a cylindrical central part 23a, and an annular flange 24 extending radially towards the inside. The base 21 of the bushing 19 is held between the flange 24 of the fixing element 23 and the body 2. A free end 25 of the central part 23a is adapted to the outer geometry of the body 2 of the safety valve 1 retaining the fixing element 23 on the body. The fixing element 23 is made of a malleable and ductile metal material allowing it to easily adapt to the body 2. Said material is preferably aluminum.

Once the magnetic group 7 is housed in the body 2 of the safety valve 1 and the bushing 19 is inserted in the magnetic group 7, the fixing element 23 is placed on the bushing 19 such that the annular flange 24 of the fixing element 23 presses on the base 21 of the bushing 19 against the body 2 of the valve 1 and the magnetic group 7, and by means of a suitable tool (such as that shown in Figure 4) the free end 25 of the fixing element 23 is crimped to the body 2 of the valve 1 such that the fixing element 23 remains fixed to the body 2 of the valve 1. The tool 30 shown in Figure 4 is introduced axially, outside the fixing element 23 such that the geometry thereof forces the free end 25 of the fixing element 23 to fit to the body 2 of the valve 1.

The safety valve 1 further comprises release means 26 for releasing the magnetic group 7 with respect to the body 2. The release means 26 are integrated in the fixing element 23. In the embodiments shown in the drawings, the release means 26 comprise an annular projection between the central part 23a and the annular flange 24 of the fixing element 23. Said annular projection extends orthogonal to the annular flange 24, continuous to said annular flange 24 and to the central part 23a. The release means 26 allow the operator to release the magnetic group 7 and/or the bushing 19 from the body 2 easily. Therefore, when the operator has to carry out maintenance actions, such as changing the magnetic group 7 and/or the bushing 19, they press on the release means 26 radially with a suitable tool (such as, for example, suitable pliers) until releasing the free end 25 of the fixing element 23 from the body 2. They then remove the fixing element 23, it being possible to remove the magnetic group 7 and/or the bushing 19 from the body 2.

On the other hand, although the fixing element 23 and the bushing 19 are independent parts in the embodiments that have been shown, in other embodiments that are not shown in the drawings, the fixing element 23 and the bushing 19 can form a single part, i.e., both elements can be made of a single part. Taking into account that the bushing 19 is made of a hard metal and the fixing element 23 is made of a ductile and malleable metal, the single part can be made of two different materials to obtain the same effect.

Finally, the safety valve 1 further comprises sealing means 27 and 28 preventing the gas from coming out from the housing 5 of the body 2 towards the outside. In the first embodiment shown in Figures 1 and 2, the sealing means 27 are arranged between a transverse surface 6 of the body 2 and the bushing 19. Said transverse surface demarcates the recess 5b in the housing 5 of the body 2. Said sealing means 27 comprise a gasket held between the transverse surface 6 of the body 2 and the base 21 of the bushing 19. The gasket is supported on the transverse surface 6 of the body 2 and on a transverse surface 15b of the support 15. Both transverse surfaces 6 and 15b are aligned with one another when the magnetic group 7 is housed in the housing 5 of the body 2.

In the second embodiment shown in Figure 3, the sealing means 28 comprise an O-ring gasket which is housed in the support 15 and closes against the recess 5b in the housing 5 of the body 2. In this second embodiment, the base 21 of the bushing 19 is supported directly on the respective transverse surfaces 6 and 15b of the body 2 and of the support 15. The rest of the technical features of this second embodiment are the same as those of the first embodiment.

## Claims

1. Safety valve adapted to a gas combustion appliance, comprising a body (2) comprising an inlet conduit (3) and an outlet conduit (4) for the gas, a magnetic group (7) housed at least partially in a housing (5) of the body (2), opening or closing gas passage from the inlet conduit (3) to the outlet conduit (4) and comprising an electromagnet (8) and a support (15) of said electromagnet (8), a bushing (19) inserted in the magnetic group (7) and coupled to the support (15), and fixing means (22) for fixing the bushing (19) and the magnetic group (7) to the body (2), the fixing means (22) comprising a fixing element (23) comprising a cylindrical central part (23a) the free end (25) of said cylindrical central part (23a) being adapted to the geometry of the body (2) retaining the fixing element (23) against the body (2), and an annular flange (24) extending radially towards the inside and retaining the bushing (19) against the support (15), the fixing element (23) being placed on the bushing (19) such that the annular flange (24) presses on a base (21) of the bushing (19) against the body (2) and the magnetic group (7), **characterized in that** the free end (25) of the central part (23a) is crimped to the body (2) of the valve (1) such that the fixing element (23) remains fixed to the body (2).

2. Safety valve according to the preceding claim, wherein the bushing (19) has a cylindrical part (20) projecting with respect to the body (2) and a base (21) which extends from an end of the cylindrical part (20) and is held between the flange (24) of the fixing element (23) and the body (2).

3. Safety valve according to the preceding claim, wherein the bushing (19) includes protrusions (20b) in the cylindrical part (20) extending radially towards the inside of the bushing (19).

4. Safety valve according to any of the preceding claims, comprising release means (26) for releasing the magnetic group (7) with respect to the body (2) integrated in the fixing element (23).

5. Safety valve according to the preceding claim, wherein the release means (26) for releasing the magnetic group (7) comprise an annular projection between the central part (23a) and the flange (24) of the fixing element (23), extending orthogonal to the flange (24).

6. Safety valve according to the preceding claim, wherein the annular projection extends continuously to the flange (24) and to the central part (23a).

7. Safety valve according to any of the preceding claims, comprising sealing means (27) arranged between a transverse surface (6) of the body (2) and the bushing (19).

8. Safety valve according to any of claims 1 to 6, comprising sealing means (28) housed in the support (15) closing against a recess (5b) of the housing (5) of the body (2).

9. Safety valve according to any of the preceding claims, wherein the fixing element (23) is made of a malleable and ductile metal material.

10. Safety valve according to any of claims 1 to 8, wherein the fixing element (23) and the bushing (19) are integrated in a single part.

## Patentansprüche

1. Sicherheitsventil angepasst an einer Gasverbrennungsanlage, umfassend einen Körper (2), welcher eine Einlassleitung (3) und eine Auslassleitung (4) für das Gas umfasst, eine magnetische Gruppe (7), welche mindestens teilweise in einer Aufnahme (5) des Körpers (2) aufgenommen ist, welche den Gasdurchgang von der Einlassleitung (3) zur Auslassleitung (4) öffnet oder schließt und welche einen Elektromagnet (8) und eine Stütze (15) des genannten Elektromagneten (8) umfasst, eine Buchse (19), welche in der magnetischen Gruppe (7) eingesetzt ist und mit der Stütze (15) gekoppelt ist, und Fixiermittel (22) zum Fixieren der Buchse (19) und der magnetischen Gruppe (7) am Körper (2), wobei die Fixiermittel (22) ein Fixierelement (23) umfassen, welches ein zylindrisches Mittelteil (23a) umfasst, wobei das freie Ende (25) des genannten zylindrischen Mittelteils (23a) an die Geometrie des Körpers (2) angepasst ist, sodass das Fixierelement (23) gegen den Körper (2) gehalten wird, und einen ringförmigen Flansch (24), welcher sich radial nach Innen erstreckt und die Buchse (19) gegen die Stütze (15) hält, wobei das Fixierelement (23) derart auf der Buchse (19) platziert wird, dass der ringförmige Flansch (24) auf eine Basis (21) der Buchse (19) gegen den Körper (2) und die magnetische Gruppe (7) drückt, **dadurch gekennzeichnet, dass** das freie Ende (25) des Mittelteils (23a) derart am Körper (2) des Ventils (1) gecrimpt ist, dass das Fixierelement (23) am Körper (2) fixiert bleibt.

2. Sicherheitsventil nach dem vorhergehenden Anspruch, wobei die Buchse (19) ein zylindrisches Teil (20), welches in Bezug auf den Körper (2) hervorsteht, und eine Basis (21), welche sich von einem Ende des zylindrischen Teils (20) erstreckt und zwischen dem Flansch (24) des Fixierelements (23) und dem Körper (2) gehalten wird, aufweist.

3. Sicherheitsventil nach dem vorhergehenden Anspruch, wobei die Buchse (19) Vorsprünge (20b) im zylindrischen Teil (20) beinhaltet, welche sich radial zum Inneren der Buchse (19) erstrecken.

4. Sicherheitsventil nach einem der vorhergehenden Ansprüche, umfassend Freigabemittel (26) zum Freigeben der magnetischen Gruppe (7) in Bezug auf den Körper (2), welche im Fixierelement (23) integriert sind.

5. Sicherheitsventil nach dem vorhergehenden Anspruch, wobei die Freigabemittel (26) zum Freigeben der magnetischen Gruppe (7) einen ringförmigen Vorsprung zwischen dem Mittelteil (23a) und dem Flansch (24) des Fixierelements (23) umfassen, welcher sich orthogonal zum Flansch (24) erstreckt.

6. Sicherheitsventil nach dem vorhergehenden Anspruch, wobei sich der ringförmige Vorsprung durchgängig zum Flansch (24) und zum Mittelteil (23a) erstreckt.

7. Sicherheitsventil nach einem der vorhergehenden Ansprüche, umfassend Dichtungsmittel (27), welche zwischen einer Querfläche (6) des Körpers (2) und der Buchse (19) angeordnet sind.

8. Sicherheitsventil nach einem der Ansprüche 1 bis 6, umfassend Dichtungsmittel (28), welche in der Stütze (15) aufgenommen sind und gegen eine Aussparung (5b) der Aufnahme (5) des Körpers (2) schließen.

9. Sicherheitsventil nach einem der vorhergehenden Ansprüche, wobei das Fixierelement (23) aus einem verformbaren und duktilen metallischen Material hergestellt ist.

10. Sicherheitsventil nach einem der Ansprüche 1 bis 8, wobei das Fixierelement (23) und die Buchse (19) in einem einzigen Teil integriert sind.

## Revendications

1. Soupape de sécurité adaptée à un appareil de gaz de combustion, comprenant un corps (2) comprenant une conduite d'entrée (3) et une conduite de sortie (4) pour le gaz, un groupe magnétique (7) logé au moins partiellement dans un logement (5) du corps (2), ouvrant ou fermant un passage de gaz de la conduite d'entrée (3) à la conduite de sortie (4) et comprenant un électro-aimant (8) et un support (15) dudit électro-aimant (8), une douille (19) insérée dans le groupe magnétique (7) et couplée au support (7), et des moyens de fixation (22) pour fixer la douille (19) et le groupe magnétique (7) au corps (2), les moyens de fixation (22) comprenant un élément de fixation (23) comprenant une pièce cylindrique centrale (23a), l'extrémité libre (25) de ladite pièce cylindrique centrale (23a) étant adaptée à la géométrie du corps (2) retenant l'élément de fixation (23) contre le corps (2), et un rebord annulaire (24) s'étendant radialement vers l'intérieur et retenant la douille (19) contre le support (15), l'élément de fixation (23) étant mis en place sur la douille (19) de manière que le rebord annulaire (24) appuie sur une base (21) de la douille (19) contre le corps (2) et le groupe magnétique (7), **caractérisée en ce que** l'extrémité libre (25) de la pièce centrale (23a) est sertie sur le corps (2) de la soupape (1) de manière que l'élément de fixation (23) demeure fixé au corps (2).

2. Soupape de sécurité selon la revendication précédente, dans laquelle la douille (19) a une pièce cylindrique (20) dépassant le corps (2) et une base (21) qui s'étend depuis une extrémité de la pièce cylindrique (20) et est maintenue entre le rebord (24) de l'élément de fixation (23) et le corps (2).

3. Soupape de sécurité selon la revendication précédente, dans laquelle la douille (19) comporte des saillies (20b) sur la pièce cylindrique (20) s'étendant radialement vers l'intérieur de la douille (19).

4. Soupape de sécurité selon l'une quelconque des revendications précédentes, comprenant des moyens de libération (26) pour libérer le groupe magnétique (7) par rapport au corps (2) intégrés dans l'élément de fixation (23).

5. Soupape de sécurité selon la revendication précédente, dans laquelle les moyens de libération (26) pour la libération du groupe magnétique (7) comprennent une saillie annulaire entre la pièce centrale (23a) et le rebord (24) de l'élément de fixation (23), s'étendant de manière orthogonale au rebord (24).

6. Soupape de sécurité selon la revendication précédente, dans laquelle la saillie annulaire s'étend en continu vers le rebord (24) et vers la pièce centrale (23a).

7. Soupape de sécurité selon les revendications précédentes, comprenant des moyens d'étanchéité (27) aménagés entre une surface transversale (6) du corps (2) et la douille (19).

8. Soupape de sécurité selon l'une quelconque des revendications 1 à 6, comprenant des moyens d'étanchéité (28) logés dans le support (15) se fermant contre un évidement (5b) du logement (5) du corps (2).

9. Soupape de sécurité selon l'une quelconque des revendications précédentes, dans laquelle l'élément de fixation (23) est réalisé en une matière de métal malléable et ductile.

10. Soupape de sécurité selon l'une quelconque des revendications 1 à 8, dans laquelle l'élément de fixation (23) et la douille (19) sont intégrés dans une seule pièce.
